(19) Europäisches Patentamt
European Patent Office
Office européen des brevets

(11) **EP 4 644 498 A1**

(12) **EUROPEAN PATENT APPLICATION**
published in accordance with Art. 153(4) EPC

(43) Date of publication:
**05.11.2025 Bulletin 2025/45**

(21) Application number: **23911718.7**

(22) Date of filing: **13.12.2023**

(51) International Patent Classification (IPC):
**C09D 191/00** (2006.01)  **C09D 201/06** (2006.01)
**D06M 10/04** (2006.01)  **D06M 13/152** (2006.01)
**D06M 13/224** (2006.01)  **D06M 13/453** (2006.01)
**D21H 19/10** (2006.01)

(52) Cooperative Patent Classification (CPC):
**C09D 191/00; C09D 201/06; D06M 10/04;
D06M 13/152; D06M 13/224; D06M 13/453;
D21H 19/10**

(86) International application number:
**PCT/JP2023/044632**

(87) International publication number:
**WO 2024/142937 (04.07.2024 Gazette 2024/27)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **28.12.2022 JP 2022211053
28.12.2022 JP 2022211048**

(71) Applicant: **Maxell, Ltd.
Kyoto 618-8525 (JP)**

(72) Inventors:
• **TANIGUCHI, Shota
Otokuni-gun, Kyoto 618-8525 (JP)**
• **MORIOKA, Miu
Otokuni-gun, Kyoto 618-8525 (JP)**
• **YOKOYAMA, Yuka
Otokuni-gun, Kyoto 618-8525 (JP)**
• **GOTO, Toshiharu
Otokuni-gun, Kyoto 618-8525 (JP)**

(74) Representative: **Mewburn Ellis LLP
Aurora Building
Counterslip
Bristol BS1 6BX (GB)**

Remarks:
A request for correction of the description has been
filed pursuant to Rule 139 EPC. A decision on the
request will be taken during the proceedings before
the examining division (Guidelines for Examination
in the EPO, A-V, 3).

(54) **COMPOSITION, COATING, WATER-RESISTANT BASE MATERIAL, AND METHOD FOR PRODUCING WATER-RESISTANT BASE MATERIAL**

(57)  A composition capable of providing good water resistance to a substrate, a coating containing such a composition, and a method of manufacturing a water-resistant substrate are provided. The composition includes: a polyphenol compound; a fat/oil; and a lecithin. The polyphenol compound may be tannin, for example, and the lecithin may be egg-yolk lecithin or soybean lecithin, for example. The composition may further include acetic acid, and may be obtained by emulsifying a mixture of these components. The substrate may be impregnated with the composition and subjected to a drying process with ultraviolet illumination or heating to provide a water-resistant substrate with improved water resistance.

EP 4 644 498 A1

```
┌─────────────────────┐
│    Application       │──── S1
└─────────────────────┘
          │
          ▼
┌─────────────────────┐
│    Ultraviolet       │──── S2
│    illumination      │
└─────────────────────┘
          │
          ▼
┌─────────────────────┐
│      Drying          │──── S3
└─────────────────────┘
```

**FIG.1**

Processed by Luminess, 75001 PARIS (FR)

**Description**

TECHNICAL FIELD

The present disclosure relates to a composition for making a substrate water-resistant, a coating containing such a composition, a water-resistant substrate with such a composition applied thereto, and a method of manufacturing a water-resistant substrate.

BACKGROUND ART

Conventional methods of manufacturing various molded products such as laminates like semiconductor substrates, decorative sheets, oil filters, and sliding parts involve the use of impregnated materials obtained by impregnating cellulosic fabric or paper (hereinafter referred to as "cellulosic fabric/paper") with thermosetting materials. Cured products obtained by curing such impregnated materials have higher strengths than cellulosic fabric/paper.

JP 2014-095049 A (Patent Document 1) discloses a molded sheet produced by: adding trehalose to commercially available odorless persimmon tannin to prepare a persimmon tannin solution; immersing scoured material (made of a union yarn with 65% polyester and 35% cotton) in the persimmon tannin solution; drying thoroughly; and forming a molded sheet (i.e., cellulose-based, fiber-reinforced thermoplastic resin composite molding).

PRIOR ART DOCUMENTS

PATENT DOCUMENTS

Patent Document 1: JP 2014-095049 A

SUMMARY OF THE INVENTION

Recently, from the considerations of SDGs and carbon neutrality, the use of cellulosic fabric/paper has significantly gained importance. However, cellulosic fabric/paper has low water resistance. In view of this, improving the water resistance of cellulosic fabric/paper is expected to make other applications possible, including familiar consumables such as paper molded products like paper bags to replace polyester bags, paper dishes, paper cups, and straws, for example.

Patent Document 1 involves immersion of material in persimmon tannin solution in order to improve its water repellency. However, the cellulose-based, fiber-reinforced thermoplastic resin composite molding contains a thermoplastic resin, which is derived from petroleum, and is not formed from a substrate that is cellulose-based faber alone. In other words, in connection with such a cellulose-based, fiber-reinforced thermoplastic resin composite molding, improvement of water resistance by means of cellulose-based fiber alone is not considered.

In view of the above-described circumstances, a problem to be solved by the present disclosure is to provide a composition capable of providing good water resistance to a substrate such as cellulosic fabric/paper more easily without the use a petroleum-derived material, a coating, a water-resistant substrate that has been made water-resistant by such a composition, and a method of manufacturing such a water-resistant substrate.

To solve the above-identified problem, the present disclosure has the following arrangement: a composition according to the present disclosure includes: a polyphenol compound; a fat or oil (hereinafter referred to as "fat/oil"); and a lecithin.

The present disclosure provides good water resistance to a substrate such as cellulosic fabric/paper without the use of a petroleum-derived material.

BRIEF DESCRIPTION OF THE DRAWINGS

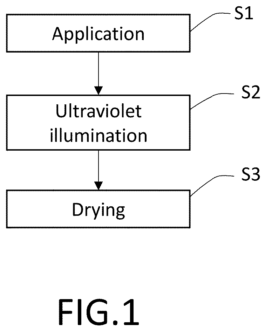

[FIG. 1] FIG. 1 illustrates a method of manufacturing a water-resistant substrate.

EMBODIMENTS FOR CARRYING OUT THE INVENTION

(Arrangement 1)

A composition according to an embodiment of the present disclosure is a composition for making a substrate water-resistant, including: a polyphenol compound; a fat or oil (hereinafter referred to as "fat/oil"); and a lecithin. The fat/oil may include at least one of an animal fat/oil and a vegetable fat/oil.

Applying such a composition to a substrate will provide good water resistance to the substrate. Examples of substrates include wood, cellulosic fabric/paper or three-dimensional moldings.

(Arrangement 2)

Starting from the composition of Arrangement 1, the fat/oil may have an iodine value of 130 to 250. This will facilitate solidification.

(Arrangement 3)

Starting from the composition of Arrangement 1 or 2, the composition may satisfy the following expressions, (1) and (2):

$$5 < F/L < 150 \quad (1),$$

and

$$1.0 < F/P < 25 \quad (2),$$

in expressions (1) and (2) above, $P$ indicates the content of the polyphenol compound relative to the composition (in weight %), $L$ indicates the content of the lecithin relative to the composition (in weight %), and $F$ indicates the content of the fat/oil relative to the composition (in weight %).

The composition has been emulsified by mixing the ingredients. Satisfying expression (1) above will ensure stability of the emulsion of the composition. Further, satisfying expression (2) will improve the water resistance of the substrate with the composition applied thereto, and also allow the composition to be applied properly to the substrate.

(Arrangement 4)

Starting from the composition of Arrangement 3, $F/L$ in expression (1) is larger than 20. This will provide even better water resistance.

(Arrangement 5)

Starting from the composition of Arrangement 3 or 4, $F$ may be 2 to 50 mass %. $L$ may be 0.05 to 6 mass %. $P$ may be 0.2 to 4 mass %. This will ensure stability of the emulsion and improve the water resistance of the substrate.

(Arrangement 6)

Starting from the composition of any one of Arrangements 1 to 5, the polyphenol compound may be at least one of a tannin compound and a flavonoid compound. This will further improve water resistance.

(Arrangement 7)

Starting from the composition of any one of Arrangements 1 to 6, the lecithin may be at least one of egg-yolk lecithin and soybean lecithin.

(Arrangement 8)

Starting from the composition of any one of Arrangements 1 to 7, the composition may further include: an alcohol compound. The alcohol compound may have a molecular structure with 2 to 40 carbon atoms. The alcohol compound may have a molecular structure with fewer than 10 carbon atoms.

(Arrangement 9)

Starting from the composition of any one of Arrangements 1 to 8, the composition may include: egg yolk containing the lecithin; and acetic acid.

(Arrangement 10)

A coating according to an embodiment of the present disclosure may contain the composition of any one of Arrangements 1 to 9 above.

(Arrangement 11)

A water-resistant substrate according to an embodiment of the present disclosure may be formed by applying the composition of any one of Arrangements 1 to 9 to the substrate.

(Arrangement 12)

Starting from the water-resistant substrate of Arrangement 11, the substrate may be a cellulosic fabric or paper.

(Arrangement 13)

A method of manufacturing a water-resistant substrate according to the present disclosure may include: applying the composition of any one of Arrangements 1 to 9 above to the substrate. This will allow manufacturing a water-resistant substrate with good water resistance in a reduced period of time.

(Arrangement 14)

Starting from the method of manufacturing a water-resistant substrate of Arrangement 13, the method may further include: illuminating the composition applied to the substrate with ultraviolet light. This will allow providing a water-resistant substrate with good water resistance in a reduced period of time. The integrated amount of light for illumination with ultraviolet light may be not more than 600 mJ/cm$^2$. This will allow producing a water-resistant substrate with good water resistance and water repellency in an even shorter period of time.

(Arrangement 15)

Starting from the method of manufacturing a water-resistant substrate of Arrangement 13 or 14, the method may further include: drying the composition applied to the substrate. The composition applied to the substrate may be dried at a temperature not lower than 80 °C and not higher than 200 °C for not shorter than 10 seconds and not longer than 10 minutes.

The composition may include a large number of micelles. The large number of micelles may have an average volume particle size not larger than 40 $\mu$m. Further, the frequency of occurrence of particle sizes of the large number of micelles not smaller than 65 $\mu$m, as numerically converted, may be not more than 10 %. This will improve the stability of the composition.

The composition may be emulsified.

Now, the composition, coating, and water-resistant substrate containing the composition according to the present disclosure will be specifically described.

[Composition]

The composition according to the present invention may contain a polyphenol compound, a fat/oil, a lecithin (e.g., egg-yolk lecithin or soybean lecithin). The composition is applied to a substrate to provide water resistance. Thus, the composition may be used as a "coating", and the coating may contain the composition. Details of the substrate will be given further below.

The polyphenol compound may be naturally derived or may be a synthetic product developed as an antioxidant. The polyphenol compound contained in the composition of the present disclosure is preferably a flavonoid compound or a tannin compound.

Examples of flavonoid compounds include catechin compounds contained in green tea, flavonol compounds such as quercetin contained in onions, isoflavone compounds contained in soybeans, and anthocyanin compounds contained in blueberries. The flavonoid compound may include one selected from the group consisting of these various flavonoid compounds, or may include two or more of them. Particularly, the flavonoid compound preferably includes a catechin compound.

Examples of tannin compounds include persimmon tannin, cinnamon, tannic acid, mimosa tannin, wattle tannin, quebracho tannin, chestnut tannin, myrabolam tannin or myrobalan tannin, valonea tannin, sumac tannin, gambier tannin, oak tannin, tara tannin, divi-divi tannin, barneocutch tannin, spruce tannin, and hemlock tannin. The tannin compound may include one selected from the group consisting of these various tannins, or may include two or more of them.

The fat/oil may be one of a vegetable fat/oil and an animal fat/oil. However, a vegetable fat/oil is preferable in terms of economic cost or ease of availability. Furthermore, to facilitate solidification, a drying oil is more preferable. A drying oil (with unsaturated fatty acid) is an oil with an iodine value of 130 or higher, and solidifies by oxidation. To facilitate solidification, the iodine value of the drying oil is preferably not lower than 130, and more preferably not lower than 150. Although no upper limit of iodine value is to be specified, it is preferably not lower than 250, for example, and more preferably not lower than 200. Iodine value may be measured by the method in accordance with JISK0070.

Examples of drying oils that are vegetable fats/oils include soybean oil, perilla oil, linseed oil, tung oil, mustard oil, shiso oil, walnut oil, safflower oil, sunflower oil, fish oil (sardine oil), black cumin seed oil, apple oil, grape seed oil, cactus oil, wheat germ oil, pumpkin seed oil, passion fruit seed oil, guava seed oil, borage oil, sisymbrium oil, pine nut oil, camelina oil, cranberry seed oil, lime seed oil, bitter gourd oil, hemp oil, sea buckthorn oil, evening primrose oil, strawberry oil, black currant oil, rosa canina fruit oil, raspberry seed oil, Inca Inchi oil, kiwi seed oil, calendula seed oil, chia seed oil, pomegranate seed oil, kukui nut oil, black currant seed oil, and borago officinalis seed oil, as well as processed oils such as stand linseed oil, boiled poppy oil, sun-bleached poppy oil, boiled linseed oil and sun-bleached linseed oil. The drying oil may include one selected from the group consisting of these various drying oils, or may include two or more of them. To facilitate handling, the drying oil is preferably at least one selected from the group consisting of soybean oil, perilla oil, linseed oil, tung oil, mustard oil, shiso oil, walnut oil, safflower oil, and sunflower oil. Perilla oil contains, inter alia, palmitic acid with 16 carbon atoms, oleic acid and linoleic acid with 18 carbon atoms, and arachidic acid with 20 carbon atoms.

Examples of animal fats/oils include terrestrial animal fats/oils such as beef fat, pork fat, sheep fat, and milk fat. Aquatic animal fats/oils, such as fish oil, whale oil, sardine oil, and liver oil, that are drying oils may also be used, as they polymerize during heat treatment, discussed further below, resulting in high molecular weight. The fat/oil contained in the composition may include one of an animal fat/oil and a vegetable fat/oil. In other words, the composition may include a vegetable fat/oil, may include an animal fat/oil, or may include a mixture of a vegetable fat/oil and an animal fat/oil.

The lecithin is a lecithin contained in egg yolk, for example. The egg yolk is the yolk of a chicken egg. Alternatively, the egg yolk may also be the yolk of an egg of a quail, an ostrich or other birds; their egg yolks also contain egg-yolk lecithin discussed further below. It will be understood that a whole egg may also be used as an ingredient in the production of the composition.

The composition may contain vinegar. The vinegar is only required to have acetic acid as its main ingredient, and is preferably a vinegar with a pH of 2 to 6.

One ingredient containing fat/oil, egg yolk and vinegar is mayonnaise. Mayonnaise is an emulsified food made from fat/oil and vinegar emulsified by lecithin which is a naturally derived emulsifier contained in egg yolk, and has high fat/oil content. The use of mayonnaise to replace fat/oil, egg yolk and vinegar will enable easier manufacture of the composition with reduced economical costs. Further, from considerations of recycling, mayonnaise that cannot be used as food anymore may be utilized. Mayonnaise to be used to manufacture the composition may be produced by thoroughly mixing egg yolk, acetic acid and fat/oil (i.e., animal fat/oil or vegetable fat/oil); and a liquid containing such a polyphenol compound as listed above (e.g., persimmon tannin coating) may be added to the mayonnaise (i.e., fat/oil, egg yolk and acetic acid), which is poured into a hermetically sealable container, for example, and the hermetically sealed container may be shaken strongly, for example, for emulsification to produce the composition. The manufacture of the composition is not limited to this method. For example, drying oil may be added to soybean lecithin, to which a vinegar or an alcohol compound, for example, may be added for dispersion/mixing. In other words, the composition is an emulsified mixture containing a polyphenol compound, a fat/oil and a lecithin. Alternatively, a commercial mayonnaise containing a salt mainly composed of sodium chloride may be used.

A preferable vegetable alcohol compound is peppermint oil. Peppermint oil is an alcohol compound with 10 to 40 carbon atoms. Thus, in implementations using an alcohol compound with 10 to 40 carbon atoms, too, good water resistance may be obtained, particularly if the lecithin used is soybean lecithin. To provide good water resistance, the alcohol compound preferably has 2 to 40 carbon atoms and, to improve the ability to impregnate cellulosic fabric/paper, preferably has not more than 10 carbon atoms.

The composition may further contain other ingredients other than the polyphenol compound (i.e., tannin), fat/oil, egg yolk and vinegar as necessary, to an extent that does not impair the effects of the present disclosure. The other ingredients are not limited to any particularly ones, and may be ones selected as appropriate from among ingredients known as ingredients that may be mixed into the composition. Examples include water, organic solvents, ammonium salts of inorganic acids, metal salts, additives (e.g., surfactants, water repellents, antifoaming agents, flame retardants, antiseptics, mold inhibitors, plasticizers, colorants, thickening agents, and bulking agents). One of these ingredients may be used alone, or two or more may be used in combination. The organic solvent preferably has an SP value not less than 10 to improve affinity with the ingredients of the composition. The viscosity of the composition may be reduced by using an organic solvent with an SP value not less than 10.

To facilitate application to or impregnation of the substrate, the composition may further contain water. In other words, the composition may be a liquid composition with a polyphenol, a fat/oil and an emulsifier (i.e., lecithin) dissolved or dispersed in water.

The composition is contained in a container. The container is not limited to any particularly material and shape, for example, as long as it is capable of containing the composition.

The composition satisfies the following expressions, (1) and (2):

$$5 < F/L < 150 \quad (1),$$

and

$$1.0 < F/P < 25 \quad (2).$$

In expressions (1) and (2), $P$ indicates the content of the polyphenol compound (in weight %) relative to the composition; $L$ indicates the content of the lecithin (in weight %) relative to the composition; and $F$ indicates the content of the fat/oil (in weight %) relative to the composition.

In expression (1), if the value of $F/L$ is too small or too large, i.e. the amount of fat/oil relative to lecithin contained in the composition is too small or too large, this will decrease the stability of the emulsion in the composition.

Further, in expression (1), $F/L$ is preferably larger than 20. This will provide even better water resistance.

In expression (2), if the value of $F/P$ is too small, this will decrease the water resistance of the water-resistant substrate with the composition applied thereto. On the other hand, if the value of $F/P$ is too large, the viscosity the composition will be so high that the composition cannot be properly applied to the substrate. Furthermore, the proportion of fat/oil will be too high: for example, if the substrate used is a cellulosic fabric/paper, the cellulosic fabric/paper cannot easily be impregnated with the composition, and fat/oil may also seep out of the water-resistant cellulosic fabric/paper, in which case, if another sheet of paper is laid on the water-resistant cellulosic fabric/paper and they are stored together, fat/oil may be transferred to this other sheet of paper.

Similar to expressions (1) and (2), to provide water resistance and enable proper application, for example, $F$ may be 2 to 50 mass %; $L$ may be 0.05 to 6 mass %; and $P$ may be 0.2 to 4 mass %. Thus, the substrate with the composition applied thereto will achieve good water resistance.

The composition contains a large number of micelles. The micelles have an average volume particle size not larger than 40 $\mu$m. This will stabilize the emulsion. In this respect, the average volume particle size of the micelles is to be not larger than 40 $\mu$m, and more preferably not larger than 20 $\mu$m. Although the average volume particle size of the micelles is not limited to any particular lower limit, it may be not smaller than 0.1 $\mu$m. The average volume particle size of the micelles may be measured by the light-scattering method using a laser diffraction/scattering-type particle diameter distribution measuring device "HORIBA LA-920" (from Horiba, Ltd.). Here, the concentration of the liquid to be measured is such that the light transmittance is not below the measurement limit. Further, the frequency of occurrence of particle sizes not smaller than 65 $\mu$m in all micelles, as numerically converted, is not higher than 10 %. Specifically, the number of micelles with particle sizes not smaller than 65 $\mu$m is to be not more than 10 % of all micelles, preferably not more than 2 %, and more preferably not more than 0.1 %. This will improve the stability of the composition. In other words, maintenance of the composition will be facilitated. The particle size of the micelles is obtained by creating a histogram of particle size, measured by the light-scattering method, and adding up the frequency percentages of the particles not smaller than 65 $\mu$m. Here, the average volume particle size is obtained by the following expression:

$$\Sigma(di^4 \times ni)/\Sigma(di^3 \times ni),$$

where $di$ is the radius of particles and $ni$ is the number of particles.

[Method of Manufacturing Water-Resistant Substrate]

Next, a method of manufacturing the water-resistant substrate according to the present invention will be specifically described with reference to FIG. 1. The water-resistant substrate of the present disclosure may be produced by applying the composition described above to a substrate.

Substrates may include not only sheets of paper such as cellulosic fabric/paper or carton, but also pulp moldings produced by injection molding as well as wood furniture. In other words, in the present disclosure, the substrate is not limited to a sheet, and substrates include three-dimensional objects and include not only intermediate parts used to produce final products, but also final products themselves.

Cellulosic fabric/paper is a fabric/paper mainly composed of cellulosic fiber. Fabric/paper is a generic term for paper and fabric. Examples of fabrics include nonwoven fabric, woven fabric, and felt. The cellulosic fabric/paper is not limited to any particular fabric/paper, and any suitable fabric/paper may be selected depending on the application of the water-resistant substrate. Nevertheless, preferably the cellulosic fabric/paper is paper. Examples of papers include filter paper, kraft paper, and processed base paper. The basis weight of the cellulosic fabric/paper is to be not lower than 30 g/m$^2$ and more preferably not lower than 50 g/m$^2$; the basis weight is to be not higher than 500 g/m$^2$ and preferably not higher than 300 g/m$^2$.

As shown in FIG. 1, the method of manufacturing a cellulosic fabric/paper may include an application step S1, an ultraviolet-illumination step S2, and a drying step S3.

[Application Step S1]

First, a composition as described above is applied to a substrate as described above. A known method may be used to apply the composition to the substrate, and the method is not limited to any particular one. Examples include a method involving applying the composition using a brush or the like, an application method involving immersing the substrate in the composition, and an application method involving injecting the composition onto the substrate using a spray or the like. The composition may be diluted in water, for example, to facilitate application to the substrate. Further, the composition may be a film of the composition formed on the surface of the substrate depending on the material of the substrate; alternatively, in implementations where the substrate used is a cellulosic fabric/paper, for example, the entire cellulosic fabric/paper may be impregnated with the composition by applying the composition thereto, or only some portions of the cellulosic fabric/paper, e.g. portions near the surface layer, may be impregnated.

In implementations where the substrate used is a cellulosic fabric/paper, the composition may be applied to and impregnate the cellulosic fabric/paper and, thereafter, the cellulosic fabric/paper impregnated with the composition may be dried before ultraviolet-illumination step S2, discussed further below, or before heat treatment during drying step S3, discussed further below, to provide a pre-preg. In such implementations, it is desirable that the pre-preg be in such a state that the composition contains 10 % or more water. Further, after application of the composition to the substrate, a fat/oil such as listed above may further be applied to the substrate.

[Ultraviolet-Illumination Step S2]

At the ultraviolet-illumination step (S2), the composition is applied to the substrate, and the composition applied to the substrate is then illuminated with ultraviolet light. Illumination with ultraviolet light is not limited to any particularly method, and may be performed by a known method. Typically, an ultraviolet lamp may be installed on the production line, and a workpiece, i.e., substrate, passes through the area being illuminated with light from the lamp to illuminate the composition applied to the substrate with ultraviolet light. The illumination time, that is, the amount of ultraviolet light for illumination, may be adjusted by adjusting the speed at which the workpiece moves. The ultraviolet illumination may be performed in a single round, or may be performed in a plurality of separate rounds.

The ultraviolet illumination lamp that illuminates the composition applied to the substrate with ultraviolet light is not limited to any particularly one, and examples include LED lamps, mercury lamps, metal halide lamps, xenon lamps, and black light lamps.

Although the illumination with ultraviolet light is not limited to any particular time or intensity, the integrated amount of light may be not larger than 600 mJ/cm$^2$, and is preferably not smaller than 500 mJ/cm$^2$, and more preferably not smaller than 400 mJ/cm$^2$. If the integrated amount of light is not larger than such an upper limit, this will improve the water resistance for the cellulosic fabric/paper. The integrated amount of light may be not smaller than 100 mJ/cm$^2$. The light source of ultraviolet light preferably includes a wavelength not more than 350 nm, and more preferably not more than 300 nm.

[Drying Step S3]

Drying step S3 is performed to remove the solvent, such as water, and to adjust hardening conditions. The drying may be performed by a known method. For example, in implementations with a roll-to-roll mass production line, drying equipment with temperature control may be installed on the line, and substrates may pass through the drying equipment to dry them successively. The drying time is determined by the length of the drying equipment and the speed of transportation. The drying conditions may be set as appropriate within ranges that do not cause the composition to completely harden. It will be understood that, for example, in implementations where the substrate used is a sheet of cellulosic fabric/paper, for example, several to several dozens of composition substrates with the composition applied thereto may be stacked upon one another before the hardening by heat treatment. Also, several to several dozens of substrates with the composition applied thereto may be stacked upon one another and formed into a desired shape before the hardening by heat treatment. As used herein, a state where the composition is dry means that the water content of the composition is lower than 10 %.

**EP 4 644 498 A1**

In drying step S3, the composition applied to the substrate is then heat treated. The heat treatment may be performed by a known method, such as hot pressing or annealing, for example. The heat treatment may performed by, for example, heating at a temperature of 80 to 200 °C for 10 seconds to 10 minutes, or by drying the composition applied to the substrate in a hot-air drying furnace at 80 °C to 200 °C; or, a batch heat-treatment process may be performed in a constant-temperature bath or safe vent drier, for example.

It will be understood that the process order of ultraviolet-illumination step S2 and drying step S3 may be reversed. In other words, drying step S3 may be performed and then ultraviolet-illumination step S2 may be performed. Further, to improve water resistance, it is preferable to perform ultraviolet-illumination step S2; still, sufficient water resistance will be achieved even without ultraviolet-illumination step S2.

This results in a water-resistant substrate with improved water resistance. The water-resistant substrate has improved water resistance over the substrate before application of the composition. Further, the above-described method will enable producing a water-resistant substrate with good water resistance and water repellency in a reduced period of time.

The water-resistant substrate is not limited to any particular applications. For example, the water-resistant substrate may be used as a material for various products including bags, plates, cups, straws, tableware, laminates such as semiconductor substrates, decorative sheets, oil filters, sliding members, core members, core materials, rollers, boxes, desks, chairs, and shelves.

It is also to be noted that the composition, coating and water-resistant substrate and the method of manufacturing a water-resistant substrate according to the present disclosure will contribute to achieving some of the Sustainable Development Goals (SDGs) proposed by the United Nations: Goal 7, "affordable and clean energy"; and Goal 12, "responsible consumption and production".

Although embodiments have been described, the present disclosure is not limited to the above-described embodiments, and various modifications are possible without departing from the spirit of the disclosure.

EXAMPLES

In the tables below, the columns labeled "Composition (in parts)" show parts by mass, whereas the columns labeled "Composition (in %)" show mass percentages. Table 1 shows the parts by mass of components contained in the compositions of the various inventive and comparative examples, whereas Table 2 shows the mass percentages of components contained in the compositions of the various inventive and comparative examples and their test results. The present disclosure is not limited to the examples described below.

(Ingredients Used)

Polyphenol compound: persimmon tannin coating from Mimasukashichisyouten (Mimasu Persimmon Tannin)
Mayonnaise: containing 7 ml vinegar (6.5 %); one egg yolk, 20 g (18.7 %); and 80 ml vegetable oil (72.7 %).
The mayonnaise was prepared in the following manner: First, ingredients such as listed above were returned to room temperature; a half amount of the vegetable oil was added, little by little, to the egg yolk containing lecithin and stirred at the same time to make it white opaque, and vinegar was further added and stirred. Lastly, the remaining half of the vegetable oil was added, little by little, and stirred at the same time to produce mayonnaise.
Organic solvent: 2-propanol from Wako Pure Chemical Corporation
Drying oil: linseed oil from Ota Oil Co. Ltd, and perilla oil from Ota Oil Co. Ltd

In Table 1 below, $P$ indicates the content of the polyphenol compound relative to the composition (in mass %), $F$ the content of the fat/oil relative to the composition (in mass %), and $L$ the content of the lecithin relative to the composition (in mass %). $P$ was calculated assuming that the persimmon tannin coating contained the polyphenol compound in 4.18 mass %. $F$, for Table 1 below, was calculated assuming that the content of the fat/oil in mayonnaise is typically 72.7 %, and was obtained by adding linseed oil (F1) and perilla oil (F2) to that fat/oil contained in mayonnaise. $L$ was calculated assuming that the content of the mayonnaise lecithin contained in mayonnaise (i.e., egg-yolk lecithin) (L1) is typically 0.71 %, and was obtained by adding soybean lecithin (L2) to that mayonnaise lecithin (L1). Soybean lecithin (L2), linseed oil (F1), perilla oil (F2) and 2-propanol, inter alia, were calculated assuming a concentration of 100 %. Further, in Tables 1 and 2, the columns for 2-propanol (C3) and peppermint oil (C10) show the respective numbers of carbon atoms.

[Table 1]

TABLE 1

| | Composition (in parts) | | | | | | | | |
|---|---|---|---|---|---|---|---|---|---|
| | Persimmon tannin coating | Mayonnaise | Yolk | Soybean lecithin | 2-propanol (C3) | Peppermint oil (C10) | Water | Linseed oil (drying oil) | Perilla oil (drying oil) |
| Inv. Ex. 1 | 100 | 25 | 0 | 0 | 100 | 0 | 0 | 0 | 0 |
| Inv. Ex. 2 | 100 | 25 | 0 | 0 | 100 | 0 | 0 | 0 | 0 |
| Inv. Ex 3 | 100 | 25 | 0 | 0 | 100 | 0 | 0 | 0 | 0 |
| Inv. Ex. 4 | 100 | 25 | 0 | 0 | 0 | 0 | 0 | 0 | 0 |
| Inv. Ex. 5 | 100 | 0 | 0 | 3.75 | 75 | 0 | 0 | 0 | 52.5 |
| Inv. Ex. 6 | 100 | 0 | 0 | 3.75 | 75 | 0 | 0 | 20 | 32.5 |
| Inv. Ex. 7 | 100 | 75 | 0 | 0 | 0 | 0 | 0 | 0 | 0 |
| Inv. Ex. 8 | 100 | 0 | 0 | 1 | 10 | 0 | 0 | 0 | 52.5 |
| Inv. Ex 9 | 100 | 75 | 0 | 0 | 100 | 0 | 0 | 0 | 0 |
| Inv. Ex. 10 | 100 | 200 | 0 | 0 | 75 | 0 | 0 | 0 | 0 |
| Inv. Ex. 11 | 100 | 0 | 0 | 3.75 | 0 | 50 | 0 | 0 | 50 |
| Inv. Ex. 12 | 100 | 0 | 0 | 3.75 | 0 | 50 | 200 | 0 | 50 |
| Inv. Ex. 13 | 100 | 0 | 0 | 3.75 | 75 | 0 | 700 | 0 | 52.5 |
| Inv. Ex. 14 | 100 | 0 | 0 | 3.75 | 10 | 0 | 0 | 0 | 52.5 |
| Inv. Ex. 15 | 100 | 0 | 0 | 1 | 50 | 0 | 0 | 0 | 52.5 |
| Inv. Ex. 16 | 100 | 0 | 0 | 0.4 | 50 | 0 | 0 | 0 | 52.5 |
| Inv. Ex. 17 | 100 | 0 | 0 | 0.3 | 50 | 0 | 0 | 0 | 52.5 |
| Inv. Ex. 18 | 100 | 0 | 0 | 11 | 50 | 0 | 0 | 0 | 52.5 |
| Inv. Ex. 19 | 100 | 0 | 0 | 2 | 50 | 0 | 0 | 0 | 25 |

(continued)

| | Composition (in parts) | | | | | | | | |
|---|---|---|---|---|---|---|---|---|---|
| | Persimmon tannin coating | Mayonnaise | Yolk | Soybean lecithin | 2-propanol (C3) | Peppermint oil (C10) | Water | Linseed oil (drying oil) | Perilla oil (drying oil) |
| Inv. Ex. 20 | 100 | 0 | 0 | 2 | 50 | 0 | 0 | 0 | 20 |
| Inv. Ex. 21 | 100 | 0 | 0 | 2 | 50 | 0 | 0 | 0 | 5 |
| Inv. Ex. 22 | 100 | 0 | 0 | 5 | 50 | 0 | 0 | 0 | 5 |
| Inv. Ex. 23 | 100 | 0 | 0 | 3.75 | 50 | 0 | 0 | 0 | 110 |
| Comp. Ex. 1 | 0 | 0 | 0 | 0 | 0 | 0 | 0 | 0 | 0 |
| Comp Ex. 2 | 100 | 0 | 0 | 0 | 0 | 0 | 0 | 0 | 0 |
| Comp. Ex. 3 | 0 | 100 | 0 | 0 | 0 | 0 | 0 | 0 | 0 |
| Comp. Ex. 4 | 0 | 100 | 0 | 0 | 100 | 0 | 0 | 0 | 0 |
| Comp. Ex. 5 | 100 (base) | 0 | 0 | 0 | 100 (upper layer) | 0 | 0 | 0 | 100 (upper layer) |
| Comp. Ex. 6 | 0 | 0 | 100 | 0 | 0 | 0 | 0 | 0 | 0 |

[Table 2]

| | Composition (in %) | | | | | | | | | | | | Heat treatment cond. | | Drained weight of applied composition (g/m²) | Immersion time (min) | Amount of absorbed water (g/m²) | Transferred oil | Stability of coating | Appearance of water-resistant paper | Water repellency | Number of applications |
|---|---|---|---|---|---|---|---|---|---|---|---|---|---|---|---|---|---|---|---|---|---|---|
| | Persimmon tannin coating | Polyphenol (P) | Mayonnaise | Mayonnaise lecithin (L1) | Yolk | Soybean lecithin (L2) | 2-propanol (C3) | Peppermint oil (C10) | Linseed oil F1 (drying oil) | Perilla oil F2 (drying oil) | F/P | F/L | Temp. (°C) | Time (min) | | | | | | | | |
| Inv. Ex. 1 | 11.1 | 1.9 | 11.1 | 0.08 | 0.0 | 0.00 | 44.4 | 0.0 | 0 | 0 | 4.35 | 105.63 | 170 | 60 | 3.56 | 60 | 1.33 | absent | A | uniform | A | 1 |
| Inv. Ex. 2 | 11.1 | 1.9 | 11.1 | 0.08 | 0.0 | 0.00 | 44.4 | 0.0 | 0 | 0 | 4.35 | 105.63 | 170 | 30 | 3.11 | 60 | 2.67 | absent | A | uniform | A | 1 |
| Inv. Ex. 3 | 44.4 | 1.9 | 11.1 | 0.08 | 0.0 | 0.00 | 44.4 | 0.0 | 0 | 0 | 4.35 | 105.63 | 170 | 15 | 3.56 | 60 | 4.44 | absent | A | uniform | A | 1 |
| Inv. Ex. 4 | 80.0 | 3.3 | 20.0 | 0.14 | 0.0 | 0.00 | 0.0 | 0.0 | 0 | 22.7 | 4.35 | 105.63 | 170 | 15 | 5.32 | 60 | 4.30 | absent | A | uniform | A | 1 |
| Inv. Ex. 5 | 43.2 | 1.8 | 0.0 | 0.00 | 0.0 | 1.62 | 32.4 | 0.0 | 0 | 14.1 | 12.56 | 14.00 | 170 | 15 | 14.50 | 60 | 6.11 | absent | A | uniform | A | 1 |
| Inv. Ex. 6 | 43.2 | 1.8 | 0.0 | 0.00 | 0.0 | 1.62 | 32.4 | 0.0 | 8.6 | 0 | 12.56 | 14.00 | 170 | 15 | 14.50 | 60 | 6.40 | absent | A | uniform | A | 1 |
| Inv. Ex. 7 | 57.1 | 2.4 | 42.9 | 0.30 | 0.0 | 0.00 | 0.0 | 0.0 | 0 | 32.1 | 13.04 | 105.63 | 170 | 60 | 5.62 | 60 | 3.44 | absent | A | uniform | A | 1 |
| Inv. Ex. 8 | 61.2 | 2.6 | 0.0 | 0.00 | 0.0 | 0.61 | 6.1 | 0.0 | 0 | 0 | 12.56 | 52.50 | 170 | 15 | 10.29 | 60 | 4.92 | absent | A | uniform | A | 1 |
| Inv. Ex. 9 | 36.4 | 1.5 | 27.3 | 0.19 | 0.0 | 0.00 | 36.4 | 0.0 | 0 | 0 | 13.04 | 105.63 | 170 | 30 | 2.96 | 60 | 3.70 | absent | A | uniform | A | 1 |
| Inv. Ex. 10 | 26.7 | 1.1 | 58.3 | 0.38 | 0.0 | 0.00 | 20.0 | 0.0 | 0 | 24.5 | 34.78 | 105.63 | 170 | 15 | 12.02 | 60 | 4.41 | present | A | uniform | A | 1 |
| Inv. Ex. 11 | 49.1 | 2.1 | 0.0 | 0.00 | 0.0 | 1.84 | 0.0 | 21.5 | 0 | 24.5 | 11.96 | 13.33 | 170 | 15 | 11.07 | 60 | 8.00 | absent | A | non-uniform | A | 1 |
| Inv. Ex. 12 | 24.8 | 1.0 | 0.0 | 0.00 | 0.0 | 0.93 | 0.0 | 12.4 | 0 | 12.4 | 11.96 | 13.33 | 170 | 15 | 4.40 | 60 | 8.40 | absent | A | non-uniform | A | 1 |
| Inv. Ex. 13 | 10.7 | 0.4 | 0.0 | 0.00 | 0.0 | 0.40 | 8.1 | 0.0 | 0 | 5.6 | 12.56 | 14.00 | 170 | 15 | 2.02 | 60 | 6.39 | absent | A | uniform | A | 1 |
| Inv. Ex. 14 | 60.2 | 2.5 | 0.0 | 0.00 | 0.0 | 2.26 | 6.0 | 0.0 | 0 | 31.6 | 12.56 | 14.00 | 170 | 15 | 13.70 | 60 | 7.31 | absent | A | non-uniform | A | 1 |
| Inv. Ex. 15 | 49.1 | 2.1 | 0.0 | 0.00 | 0.0 | 0.49 | 24.6 | 0.0 | 0 | 25.8 | 12.56 | 52.50 | 170 | 15 | 14.29 | 60 | 4.21 | absent | A | uniform | A | 1 |
| Inv. Ex. 16 | 49.3 | 2.1 | 0.0 | 0.00 | 0.0 | 0.20 | 24.6 | 0.0 | 0 | 25.9 | 12.56 | 131.25 | 170 | 15 | 12.00 | 60 | 5.31 | absent | A | uniform | A | 1 |
| Inv. Ex. 17 | 49.3 | 2.1 | 0.0 | 0.00 | 0.0 | 0.15 | 24.7 | 0.0 | 0 | 25.9 | 12.56 | 175.00 | 170 | 15 | 7.60 | 60 | 8.79 | absent | B | non-uniform | A | 1 |
| Inv. Ex. 18 | 46.8 | 2.0 | 0.0 | 0.00 | 0.0 | 5.15 | 23.4 | 0.0 | 0 | 24.6 | 12.56 | 4.77 | 170 | 15 | 17.50 | 60 | 9.52 | absent | B | non-uniform | A | 1 |
| Inv. Ex. 19 | 56.5 | 2.4 | 0.0 | 0.00 | 0.0 | 1.13 | 28.2 | 0.0 | 0 | 11.1 | 5.98 | 12.50 | 170 | 15 | 8.90 | 60 | 7.55 | absent | A | uniform | A | 1 |
| Inv. Ex. 20 | 58.1 | 2.4 | 0.0 | 0.00 | 0.0 | 1.16 | 29.1 | 0.0 | 0 | 11.6 | 4.78 | 10.00 | 170 | 15 | 5.80 | 60 | 7.70 | absent | A | uniform | A | 1 |
| Inv. Ex. 21 | 63.7 | 2.7 | 0.0 | 0.00 | 0.0 | 1.27 | 31.8 | 0.0 | 0 | 3.2 | 1.20 | 2.50 | 170 | 15 | 3.80 | 60 | 9.38 | absent | B | non-uniform | A | 1 |
| Inv. Ex. 22 | 62.5 | 2.6 | 0.0 | 0.00 | 0.0 | 3.13 | 31.3 | 0.0 | 0 | 3.1 | 1.20 | 1.00 | 170 | 15 | 4.00 | 60 | 9.50 | absent | B | non-uniform | A | 1 |
| Inv. Ex. 23 | 37.9 | 1.6 | 0.0 | 0.00 | 0.0 | 1.42 | 19.0 | 0.0 | 0 | 41.7 | 26.32 | 29.33 | 170 | — | 8.29 | 60 | 4.72 | present | A | uniform | A | 1 |
| Comp. Ex. 1 | 100.0 | 0.0 | 0.0 | 0.00 | 0.0 | 0.00 | 0.0 | 0.0 | 0 | 0 | 0.00 | — | — | — | 0.00 | 60 | 14.22 | — | — | — | B | 1 |
| Comp. Ex. 2 | 0.0 | 4.2 | 100.0 | 0.71 | 0.0 | 0.00 | 0.0 | 0.0 | 0 | 0 | 0.00 | 105.63 | 170 | 15 | -0.01 | 60 | 13.77 | — | — | — | B | 1 |
| Comp. Ex. 3 | 0.0 | 0.0 | 50.0 | 0.36 | 0.0 | 0.00 | 0.0 | 0.0 | 0 | 0 | — | 105.63 | 170 | 15 | 10.66 | 60 | 9.77 | — | — | — | B | 1 |
| Comp. Ex. 4 | 0.0 | 0.0 | 0.0 | 0.00 | 100.0 | 0.00 | 0.0 | 0.0 | 0 | 0 | — | — | 170 | 15 | 16.88 | 60 | 11.11 | — | — | — | B | 1 |
| Comp. Ex. 5 | 33.3 | 1.4 | 0.0 | 0.00 | 0.0 | 0.00 | 33.3 | 0.0 | 0 | 33.3 | — | — | 170 | 15 | 13.92 | 60 | 11.55 | — | C | — | B | 2 |
| Comp. Ex. 6 | 0.0 | 0.0 | 0.0 | 0.00 | 0.0 | 0.00 | 0.0 | 0.0 | 0 | 0 | — | — | 170 | 15 | 13.92 | 60 | 14.02 | — | — | — | B | 1 |

[Preparation of Composition]

(Inventive Examples 1 to 10 and 13 to 23)

For each of these examples, persimmon tannin coating (i.e., polyphenol compound), mayonnaise, soybean lecithin, 2-propanol (i.e., organic solvent with three carbon atoms) and drying oil in the relevant parts by weight shown in Table 1 were sealed in a hermetically sealable container and strongly shaken for about one minute for dispersion/mixing to prepare a liquid composition. For each of Inventive Examples 1 to 4, 7, 9 and 10, the ratio of mayonnaise to persimmon tannin coating was as shown in Tables 1 and 2. Further, for Inventive Examples 1 to 3, 5 to 6, 8 to 10 and 13 to 23, the ratio of 2-propanol i.e. IPA (organic solvent) to persimmon tannin coating was 75 to 100 %.

(Inventive Examples 11 and 12)

For each of Inventive Examples 11 and 12, peppermint oil, representing the alcohol, was sealed in a hermetically sealable container without adding 2-propanol, and dispersed/mixed in the same manner as above to prepare a composition. Peppermint oil has 10 to 40 carbon atoms.

[Measurement of Particle Size of Composition]

The particle-size distribution of the micelles of the composition was measured by the light-scattering method using the "HORIBA LA-920" (from Horiba, Ltd.), mentioned above; the results show that the average volume particle size of the micelles directly after preparation was not larger than 40 μm and the components separated over time. After dispersion/mixing, the proportion of particles of 65 μm or larger was not higher than 10 %, improving the stability of the composition. As used herein, average particle size means the particle size at the integrated value of 50 % of the number of particles in the particle-size distribution (i.e., average volume particle size).

[Fabrication of Samples]

For each of Inventive Examples 1 to 23, the composition was applied to a substrate, i.e., cellulosic fabric/paper (JK Wiper (registered trademark) 150S (from Nippon Paper Crecia Co., Ltd.), so as to impregnate both sides of the sheet of kraft paper with no portions left unimpregnated, and heat treatment was performed under the relevant heat treatment conditions shown in Table 2 to provide a sample impregnated with the composition.

(Comparative Examples 1 to 6)

Kraft paper with a basis weight of about 50 g/m² (unbleached, uncalendared on both sides) (from Hokuetsu Corporation) was cut into a square of 15 cm × 15 cm, and the mass was measured. This sheet of kraft paper only was treated as a sample for Comparative Example 1.
For each of Comparative Examples 2 to 4, a sheet of JK Wiper 150 S (from Nippon Paper Crecia Co., Ltd.) was impregnated with persimmon tannin coating containing the polyphenol compound (Comparative Example 2), mayonnaise (Comparative Example 3), a mixture of mayonnaise and organic solvent (Comparative Example 4), egg yolk (Comparative Example 6) in the relevant proportions shown in Tables 1 and 2 so as to impregnate both sides of the sheet of kraft paper with no portions left unimpregnated, and heat treatment was performed under the relevant heat conditions shown in Table 2 to produce a sample impregnated with the respective component.
For Comparative Example 5, to provide a base, a sheet of JK Wiper 150 S (from Nippon Paper Crecia Co., Ltd.) was impregnated with persimmon tannin coating containing the polyphenol compound in the relevant proportion shown in Tables 1 and 2 so as to impregnate both sides of the sheet of kraft paper with no portions left unimpregnated, and heat treatment was performed under the relevant heat treatment conditions shown in Table 2 to produce a sample impregnated with persimmon tannin coating. Thereafter, the paper was impregnated with drying oil and organic solvent in the same manner to provide an upper layer, and again subjected to heat treatment under the heat treatment conditions shown in Table 2, thus producing a sample impregnated with drying oil and organic solvent.
The mass of each sample was measured, and the drained weight of the applied composition with which the kraft paper was impregnated was calculated from the measured mass using the following equation:

$$\text{composition (g)} = \text{B}-\text{A}.$$

Here, A indicates the mass (g) of the kraft paper prior to impregnation, and B indicates the mass (g) of the sample impregnated with the composition after heat treatment. The drained weight of the applied composition for Comparative Example 2 was negative because of the large amount of evaporated water that had been contained in the kraft paper before application of the composition.

[Evaluation of Amount of Absorbed Water]

The amount of absorbed water for each sample fabricated was evaluated in the following procedure: For each fabricated sample of the size of 150 mm × 150 mm, the mass was measured. A Pax Naturon (registered trademark) kitchen sponge from Taiyo Yushi Corp was cut with a cutter into a piece of 6 cm × 10.5 cm × 3 cm, which was allowed to absorb sufficient amount of water; with that state kept, the sponge was placed on the middle of the surface of the sample and was left for 60 minutes. After 60 minutes, the sponge was removed and water was wiped off with a white Kim towel (from Nippon Paper Crecia Co., Ltd.) folded into four. Thereafter, the remaining water drops on the surface of the sample were wiped off with another Kim towel such that no water drops remained on the surface of the sample. The mass of the sample with the water wiped off was measured, and the difference between the masses before and after placement of the sponge was treated as the amount of absorbed water. The results are as shown in Table 1. The smaller the amount of absorbed water, the better the water-resistance of the sample.

[Evaluation of Transfer of Oil]

For each fabricated sample, the condition of transfer of oil was evaluated in the following manner: First, the sample was sandwiched by two sheets of kraft paper made of virgin pulp, on top of which a 10 cm square metal sheet was placed, on top of which a weight was placed such that a load of 1 kg was applied to an area of 10 cm$^2$, and was left for one week. Thereafter, a visual inspection was done to determine whether oil had seeped into the sheets of kraft paper between which the sample was sandwiched, forming stains; if the kraft paper had stains, it was determined that transferred oil was "present".

[Evaluation of Stability of Coating]

For each composition (i.e., coating), its stability was evaluated in the following manner: First, a composition was prepared and was then left as it was for 24 hours. Thereafter, if the composition had separated into two layers or had sediments, the composition was determined to lack stability and classified as "C"; if there was no clear separation such as sedimentation but the apparent viscosity had increased and, when stirred again, the viscosity decreased, the composition was classified as "B"; if the composition was uniformly dispersed without separating into two layers, for example, i.e., if it had kept a state of emulsion, the composition was determined to have stability and classified as "A".

[Evaluation of Appearance of Water-Resistant Cellulosic Fabric/Paper (Water-Resistant Paper)]

A fabricated sample with clearly visible color irregularities caused by the composition with which the sample was impregnated was determined to have a "non-uniform" appearance, and otherwise a "uniform" appearance.

[Evaluation of Water Repellency]

The water repellency of each fabricated sample was tested based on an old JIS standard (JIS P8137), and if the evaluation based on this standard classified the sample as R9 or R10, the sample was classified as "A", and otherwise as "B".

The amounts of absorbed water of Inventive Examples 1 to 3, which had a composition containing persimmon tannin coating (i.e., polyphenol compound), mayonnaise (i.e., fat/oil, egg yolk and vinegar) and organic solvent applied thereto, and the amount of absorbed water of Inventive Example 4, which had a composition containing persimmon tannin coating and mayonnaise applied thereto, were smaller than the amount of absorbed water of Comparative Example 1, which was constituted by kraft paper only, demonstrating improvements in water resistance. Similarly, Inventive Example 5, which contained persimmon tannin coating, soybean lecithin, organic solvent and drying oil, demonstrated an improvement in water resistance. The amounts of absorbed water of Comparative Examples 2 to 5, which had a composition applied thereto that lacked one of persimmon tannin coating (i.e., polyphenol compound), mayonnaise (i.e., egg-yolk lecithin), soybean lecithin and drying oil, were smaller than that of Comparative Example 1 but larger than those of Inventive Example 1 to 6. In Comparative Example 5, the persimmon tannin coating and drying oil were separated, and thus the composition needed to be applied in two separate steps, i.e., the step of applying persimmon tannin coating and the step of applying drying oil. This suggests that lecithin prevents separation of the composition. Further, the amount of absorbed water of Comparative Example 6, where the composition was constituted by egg yolk only, was substantially equal to the amount of absorbed water of Comparative Example 1. These results demonstrate that the use of a composition containing all of the polyphenol compound contained in a persimmon tannin coating, egg-yolk lecithin or soybean lecithin and fat/oil will significantly reduce the amount of water absorbed by the cellulosic fabric/paper.

Further, a comparison among Inventive Examples 1 to 3 shows that the longer the drying time, the smaller the amount of water absorbed. However, even in Inventive Examples 3 to 6, which had a relatively short drying time, the amount of water absorbed was sufficiently reduced relative to the comparative examples. In other words, the evaluation of Inventive Examples 1 to 3 demonstrates the ability to fabricate a water-resistant cellulosic fabric/paper with good water resistance while reducing work time. Further, a comparison among Inventive Examples 1 to 23 shows that, when the value of $F/L$ exceeded 20, the amount of absorbed water tended to decrease relatively significantly. In other words, water resistance tended to improve significantly. This shows that, if $F/L$ in expression (1) is larger than 20, better water resistance will be achieved.

Further, for each of Inventive Examples 1 to 23, "Transferred of oil", "Stability of coating (i.e., composition)" and "Appearance of water-resistant paper (i.e., water-resistant cellulosic fabric/paper)" mentioned above were evaluated.

The results show that, regarding "Transferred oil", transferred oil was "present" for Inventive Examples 10 and 23, whereas transferred oil was "absent" for the other inventive examples. Specifically, each of Inventive Examples 10 and 23 had a relatively high content of the fat/oil component such as mayonnaise or perilla oil. That is, the value of $L/P$ was too large, resulting in a high viscosity that made it impossible to properly impregnate the sheet with the composition, which is presumably why transfer of oil occurred. This demonstrates that the value of $L/P$ in expression (2) is to be smaller than 25. It may be possible to properly impregnate the sheet with such a composition by diluting it with water; however, this would decrease the content of the polyphenol compound $P$, which is thought to decrease water repellency.

Next, "Stability of coating" was evaluated. The results were that Inventive Examples 17, 18, 21 and 22 were classified as "B", whereas the other inventive examples were classified as "A". For Inventive Examples 18, 21 and 22, the value of $F/L$ was too small, i.e., the lecithin content was too low, which is presumably why the stability of the coating was classified as "B". For Inventive Example 17, the value of $F/L$ was too large, i.e., the lecithin content was too high, which is presumably why the stability of coating was classified as "B". This demonstrates that, to ensure stability of the coating, the value of $F/L$ is to be larger than 5 and smaller than 150. In other words, it shows that a composition that satisfies expression (1) "5<$F/L$<150" will ensure stability of the coating.

Next, the "Appearance of water-resistant paper" was evaluated. The results show that Inventive Examples 11, 12, 14, 18, 21 and 22 had a "non-uniform" appearance, whereas the other inventive examples had no visible color irregularities due to the composition. For Inventive Example 11, 2-propanol was replaced with "Peppermint oil" as an organic solvent. In Inventive Example 11, sufficient water-resistance was achieved but viscosity was high, which is presumably why the "Appearance of water-resistant paper" was non-uniform. For Inventive Example 12, the dilution with water at a factor of 2 made impregnation easier than for Inventive Example 11; however, the "Appearance of water-resistant paper" was non-uniform. It is to be noted that, if 2-propanol was used, good water resistance was achieved even with a dilution with water at a factor of 4. For Inventive Example 14, the content of 2-propanol was relatively low, which increased viscosity, and the small amount of the oil component caused a decrease in the ability of the coating to impregnate kraft paper, which is presumably why the "Appearance of water-resistant paper" was non-uniform. For Inventive Examples 18, 21 and 22, the lecithin content was too high, and thus viscosity increased, which is presumably why the "Appearance of water-resistant paper" was non-uniform. This suggests that the contents of 2-propanol, peppermint oil and lecithin affect the "Appearance of water-resistant paper".

Next, "water repellency" was evaluated. The results show that all of Inventive Examples 1 to 23 provided good water repellency. Specifically, for every one of Inventive Examples 1 to 23, the value of $F/P$ was larger than 1.0. This and the above-discussed evaluation of "Transferred oil" show that satisfying expression (2) "1.0<$F/P$<25" will improve water repellency and allow the cellulosic fabric/paper to be properly impregnated with the composition.

The content of the polyphenol compound $P$ may be calculated in the following manner: First, for 0.2 to 0.6 g of a specimen of the composition, 550 % ethanol is added, which is then irradiated with ultrasonic waves for centrifugal separation. Thereafter, filtering is performed to produce a test solution. Furthermore, a 1 ml catechin standard solution is prepared. 0.5 ml of the Folin-Ciocalteu reagent and 5 ml of a 0.4 mol/L sodium carbide solution are added to the catechin standard solution, which is left in an environment at 30 °C for 25 minutes; then, an ultraviolet/visible spectrophotometer is used for measurement at a wavelength of 660 nm to determine the content of the polyphenol compound $P$. It is to be noted that the catechin standard solution has been obtained by dissolving a standard specimen made of (+)-catechin in water for dilution. More specifically, 10 mg of (+)-catechin is weighed out and put into a 10 mL measuring flask. It is then diluted with methanol in the measuring flask to 10 mL to prepare a 1000 ppm standard specimen. 400 $\mu$L purified water is added to this standard specimen to prepare a 100 ppm catechin standard solution.

The lecithin content $L$ may be calculated based on the following method: First, a solution obtained by mixing chloroform and methanol in a ratio of 2:1 is added to 1.2 g of a specimen of the composition to produce a mixture solution. Next, the mixture solution is subjected to centrifugal separation; then, 100 ml of a liquid mixture obtained by mixing 100 ml of the 2:1 chloroform-methanol is added to the sediments, and all this is mixed well and subjected to centrifugal separation; then, 20 mL of the liquid mixture obtained by mixing chloroform and methanol at 2:1 is further added to the solid, which is subjected to centrifugal separation. 93 ml of a 0.99 % potassium chloride solution is added to all the upper layers obtained from these centrifugal separations, and is left for a night. This is followed by dehydration/filtration, and the solvent is removed through evaporation and then 50 ml chloroform is added; after mixing, 5 ml is isolated. After removal of the solvent, 0.5 magnesium nitrate is added, which is decomposed at 550 °C for 16 hours; then, 5 ml of a 6 mol/L hydrochloric acid solution is added; further, 50 ml water at constant volume is added and uniformly mixed, and then 20 ml is isolated. This is neutralized and, thereafter, 5 ml of molybdenum blue color reagent, 1 ml of a 5 % ascorbic acid solution and 50 ml of water are added for coloring, and absorbance is measured at a wavelength of 710 nm for quantification.

The content of the fat/oil $F$ may be calculated based on the following method: First, a solvent with a molecular structure with no CH group, such as carbon tetrachloride or trichlorotrifluoroethane, is added to a specimen of the composition to separate the oil component from the non-oil component, such as water. Thereafter, a calibration curve is created from the absorbance of infrared spectra using an OCB mixture standard substance, and the calibration curve is compared with the absorbance of the specimen to quantify the content of the fat/oil $F$.

**Claims**

1. A composition for making a substrate water-resistant, comprising: a polyphenol compound; a fat or oil (hereinafter referred to as "fat/oil"); and a lecithin.

2. The composition according to claim 1, wherein the fat/oil has an iodine value of 130 to 250.

3. The composition according to claim 1, wherein the composition satisfies the following expressions, (1) and (2):

$$5 < F/L < 150 \quad (1),$$

and

$$1.0 < F/P < 25 \quad (2),$$

in expressions (1) and (2) above, $F$ indicates the content of the fat/oil relative to the composition (in weight %), $L$ indicates the content of the lecithin relative to the composition (in weight %), and $P$ indicates the content of the polyphenol compound relative to the composition (in weight %).

4. The composition according to claim 3, wherein $F/L$ in expression (1) is larger than 20.

5. The composition according to claim 3, wherein:

    $F$ is 2 to 50 mass %;
    $L$ is 0.05 to 6 mass %; and
    $P$ is 0.2 to 4 mass %.

6. The composition according to claim 1, wherein the polyphenol compound is at least one of a tannin compound and a flavonoid compound.

7. The composition according to claim 1, wherein the lecithin is at least one of egg-yolk lecithin and soybean lecithin.

8. The composition according to claim 1, further comprising: an alcohol compound,
   wherein the alcohol compound has a molecular structure with 2 to 40 carbon atoms.

9. The composition according to claim 1, wherein the composition comprises: egg yolk containing the lecithin; and acetic acid.

10. A coating containing the composition according to any one of claims 1 to 9.

11. A water-resistant substrate, formed by applying the composition according to any one of claims 1 to 9 to the substrate.

12. The water-resistant substrate according to claim 11, wherein the substrate is a cellulosic fabric or paper.

13. A method of manufacturing a water-resistant substrate, comprising:
applying the composition according to any one of claims 1 to 9 to the substrate.

14. The method of manufacturing a water-resistant substrate according to claim 13, further comprising:
illuminating the composition applied to the substrate with ultraviolet light.

15. The method of manufacturing a water-resistant substrate according to claim 13, further comprising:
drying the composition applied to the substrate.

| Application | — S1 |

| Ultraviolet illumination | — S2 |

| Drying | — S3 |

# FIG.1

## INTERNATIONAL SEARCH REPORT

| International application No. |
| --- |
| **PCT/JP2023/044632** |

| A. | CLASSIFICATION OF SUBJECT MATTER |
| --- | --- |

*C09D 191/00*(2006.01)i; *C09D 201/06*(2006.01)i; *D06M 10/04*(2006.01)i; *D06M 13/152*(2006.01)i; *D06M 13/224*(2006.01)i; *D06M 13/453*(2006.01)i; *D21H 19/10*(2006.01)i

FI: C09D191/00; C09D201/06; D06M10/04; D06M13/152; D06M13/224; D06M13/453; D21H19/10 Z

According to International Patent Classification (IPC) or to both national classification and IPC

| B. | FIELDS SEARCHED |
| --- | --- |

Minimum documentation searched (classification system followed by classification symbols)

C09D191/00; C09D201/06; D06M10/04; D06M13/152; D06M13/224; D06M13/453; D21H19/10

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | 柿渋と亜麻仁油・桐油に蜜蝋を混合して柿渋入り蜜蝋ワックスを作ってみる, 株式会社大杉型紙工業, 14 April 2012, URL: https://www.osugi.co.jp/kakisibu/mixing-kakisibu-oil-wax.html, (OSUGI KATAGAMI KOGYO CO., LTD.), non-official translation (Try making beeswax with persimmon astringent by mixing beeswax with persimmon astringent, linseed oil, and tung oil.) entire text | 1-2, 6-7, 10-15 |
| A | | 3-5, 8-9 |
| L | Search results of Internet Archive Wayback Machine, 01 February 2024, URL: https://web.archive.org/web/20120401000000*/https://www.osugi.co.jp/kakisibu/mixing-kakisibu-oil-wax.html full text | 1-15 |
| X | JP 2008-280257 A (FUJIFILM CORPORATION) 20 November 2008 (2008-11-20) claims, paragraphs [0016], [0037], [0059], examples | 1-2, 6-8, 10-11, 13-15 |
| A | | 3-5, 9, 12 |

| ✓ | Further documents are listed in the continuation of Box C. | ✓ | See patent family annex. |
| --- | --- | --- | --- |

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **01 February 2024** | **20 February 2024** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

## INTERNATIONAL SEARCH REPORT

| International application No. |
|---|
| **PCT/JP2023/044632** |

### C.    DOCUMENTS CONSIDERED TO BE RELEVANT

| Category* | Citation of document, with indication, where appropriate, of the relevant passages | Relevant to claim No. |
|---|---|---|
| X | JP 2021-187902 A (TOYOTA CENTRAL R&D LABS., INC.) 13 December 2021 (2021-12-13) | 1-2, 6-7, 10-11, 13-15 |
| | claims, examples | |
| A | | 3-5, 8-9, 12 |
| T | レシチンとは?, 株式会社明治, 29 January 2024, URL: https://www.meiji.co.jp/hello-chocolate/basic/53.html, (MEIJI CO., LTD.), non-official translation (What is lecithin?) entire text | 1-15 |
| A | CN 107892844 A (NINGBO AIKESEN AUTOMOTIVE ELECTRONICS CO., LTD.) 10 April 2018 (2018-04-10) entire text | 1-15 |
| A | JP 2015-078328 A (BOSCH PACKAGING TECHNOLOGY KK) 23 April 2015 (2015-04-23) entire text | 1-15 |

Form PCT/ISA/210 (second sheet) (July 2022)

## INTERNATIONAL SEARCH REPORT
### Information on patent family members

International application No.

**PCT/JP2023/044632**

| Patent document cited in search report | | | Publication date (day/month/year) | Patent family member(s) | | | Publication date (day/month/year) |
|---|---|---|---|---|---|---|---|
| JP | 2008-280257 | A | 20 November 2008 | WO | 2008/140065 | A2 | |
| | | | | claims | | | |
| | | | | TW | 200902072 | A | |
| JP | 2021-187902 | A | 13 December 2021 | (Family: none) | | | |
| CN | 107892844 | A | 10 April 2018 | (Family: none) | | | |
| JP | 2015-078328 | A | 23 April 2015 | (Family: none) | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2014095049 A